# EUROPEAN PATENT APPLICATION

(11) **EP 4 549 841 A1**
(43) Date of publication of application: **07.05.2025**
(21) Application number: 23831411.6
(22) Date of filing: 27.06.2023
(51) Int. Cl.: F25B 25/02

(54) **REFRIGERATION CYCLE DEVICE**

(30) Priority: 28.06.2022 US 202263356360 P
(71) Applicant: DAIKIN INDUSTRIES, LTD., Osaka-shi, Osaka 530-0001 (JP); The University of Tokyo, Bunkyo-ku, Tokyo 113-8654 (JP)
(72) Inventor: KUMAKURA, Eiji, Osaka-shi, Osaka 530-0001 (JP); KAJI, Ryuhei, Osaka-shi, Osaka 530-0001 (JP); UEDA, Hiroki, Osaka-shi, Osaka 530-0001 (JP); TANAKA, Masaki, Osaka-shi, Osaka 530-0001 (JP); NISHIMURA, Kosuke, Osaka-shi, Osaka 530-0001 (JP); FURUSHO, Kazuhiro, Osaka-shi, Osaka 530-0001 (JP); KIKUCHI, Yoshimasa, Osaka-shi, Osaka 530-0001 (JP); DAIGUJI, Hirofumi, Bunkyo-ku, Tokyo 113-8654 (JP); MAJUMDAR, Arun, Stanford, CA 94305 (US); HSU, Wei-Lun, Bunkyo-ku, Tokyo 113-8654 (JP); SHAMIM, Jubair Ahmed, Bunkyo-ku, Tokyo 113-8654 (JP)
(74) Representative: Hoffmann Eitle
(86) International application number: PCT/JP2023/023692
(87) International publication number: WO 2024/004971

(57) **Abstract**

A refrigeration cycle apparatus (1, 101, 201, 301, 401, 501) includes a refrigerant circuit (11, 111, 211, 311, 411, 511) and an adsorbent. The refrigerant circuit includes a compressor (31, 131, 231, 331, 431, 531) that compresses a refrigerant. The refrigerant circuit constitutes a vapor compression refrigeration cycle in which the refrigerant circulates. The adsorbent adsorbs and desorbs the refrigerant circulating in the refrigerant circuit. The adsorbent adsorbs and desorbs the refrigerant in accordance with a change in a pressure of the refrigerant circulating in the refrigerant circuit.

## Description

### TECHNICAL FIELD

The present disclosure relates to a refrigeration cycle apparatus.

### BACKGROUND ART

Hitherto, a hybrid refrigeration system employing a combination of a vapor compression refrigeration cycle and an adsorption refrigeration cycle has been used. Patent Literature 1 (International Publication No. 2009/145278) discloses a hybrid refrigeration system in which a pair of adsorbers of an adsorption refrigeration cycle are alternately cooled and heated to alternately repeat adsorption and desorption of a refrigerant in order to reduce a mechanical work load of a compressor of a vapor compression refrigeration cycle.

### SUMMARY OF THE INVENTION

### <Technical Problem>

A hybrid refrigeration system that controls adsorption and desorption of a refrigerant in an adsorption refrigeration cycle by using a change in the pressure of a refrigerant circulating in a vapor compression refrigeration cycle is not conventionally used.

### <Solution to Problem>

A refrigeration cycle apparatus according to a first aspect includes a first unit and an adsorbent. The first unit constitutes a refrigeration cycle in which a refrigerant circulates. The adsorbent adsorbs and desorbs the refrigerant circulating in the first unit. The adsorbent adsorbs and desorbs the refrigerant in accordance with a change in a pressure of the refrigerant circulating in the first unit.

The refrigeration cycle apparatus according to the first aspect has a lower operating pressure than a refrigeration cycle apparatus that does not have an adsorbent, and is capable of using the adsorption heat and desorption heat of the refrigerant. Thus, the refrigeration cycle apparatus according to the first aspect is capable of reducing the cost and improving the efficiency of the refrigeration cycle.

A refrigeration cycle apparatus according to a second aspect includes a first unit and an adsorbent. The first unit includes a compressor that compresses a refrigerant and constitutes a vapor compression refrigeration cycle in which the refrigerant circulates. The adsorbent adsorbs and desorbs the refrigerant circulating in the first unit. The adsorbent adsorbs and desorbs the refrigerant in accordance with a change in a pressure of the refrigerant circulating in the first unit.

The refrigeration cycle apparatus according to the second aspect has a lower operating pressure than a refrigeration cycle apparatus that has a vapor compression refrigeration cycle and does not have an adsorbent, and is capable of using the adsorption heat and desorption heat of the refrigerant. Thus, the refrigeration cycle apparatus according to the second aspect is capable of reducing the cost and improving the efficiency of the refrigeration cycle.

A refrigeration cycle apparatus according to a third aspect is the refrigeration cycle apparatus according to the second aspect, in which the first unit further includes an expansion mechanism that decompresses the refrigerant, a high-pressure region, and a low-pressure region. In the high-pressure region, the refrigerant that has been compressed by the compressor and that has not yet been decompressed by the expansion mechanism flows. In the low-pressure region, the refrigerant that has been decompressed by the expansion mechanism and that has not yet been compressed by the compressor flows. The adsorbent adsorbs the refrigerant in the high-pressure region and desorbs the refrigerant in the low-pressure region.

A refrigeration cycle apparatus according to a fourth aspect is the refrigeration cycle apparatus according to the third aspect, in which the refrigeration cycle apparatus further includes a first adsorber including the adsorbent, a second adsorber including the adsorbent, and a switcher. The switcher alternately switches between a first mode and a second mode. In the first mode, the switcher introduces the refrigerant in the high-pressure region into the first adsorber to cause the adsorbent in the first adsorber to adsorb the refrigerant, and introduces the refrigerant in the low-pressure region into the second adsorber to cause the adsorbent in the second adsorber to desorb the refrigerant. In the second mode, the switcher introduces the refrigerant in the low-pressure region into the first adsorber to cause the adsorbent in the first adsorber to desorb the refrigerant, and introduces the refrigerant in the high-pressure region into the second adsorber to cause the adsorbent in the second adsorber to adsorb the refrigerant.

A refrigeration cycle apparatus according to a fifth aspect is the refrigeration cycle apparatus according to the third aspect, in which the adsorbent circulates in the first unit together with the refrigerant.

A refrigeration cycle apparatus according to a sixth aspect is the refrigeration cycle apparatus according to the fifth aspect, in which the refrigeration cycle apparatus further includes a separator that separates the refrigerant circulating in the first unit and the adsorbent circulating in the first unit from each other. After being separated from the refrigerant by the separator, the adsorbent merges with the refrigerant compressed by the compressor or the refrigerant decompressed by the expansion mechanism.

A refrigeration cycle apparatus according to a seventh aspect is the refrigeration cycle apparatus according to the sixth aspect, in which the refrigeration cycle apparatus further includes a pressurizer. The separator separates the refrigerant in the low-pressure region and the adsorbent from each other. The pressurizer pressurizes the adsorbent separated from the refrigerant by the separator.

A refrigeration cycle apparatus according to an eighth aspect is the refrigeration cycle apparatus according to the sixth aspect or the seventh aspect, in which the refrigeration cycle apparatus further includes a depressurizer. The separator separates the refrigerant in the high-pressure region and the adsorbent from each other. The depressurizer depressurizes the adsorbent separated from the refrigerant by the separator.

A refrigeration cycle apparatus according to a ninth aspect is the refrigeration cycle apparatus according to any one of the sixth to eighth aspects, in which the separator separates the refrigerant and the adsorbent from each other by centrifugal separation.

A refrigeration cycle apparatus according to a tenth aspect is the refrigeration cycle apparatus according to the third aspect, in which the refrigeration cycle apparatus further includes a second unit and a mixer. The second unit includes a pressurizer that pressurizes the adsorbent and a depressurizer that depressurizes the adsorbent. The second unit constitutes an adsorption refrigeration cycle in which the adsorbent circulates. The mixer mixes the refrigerant flowing in the first unit and the adsorbent flowing in the second unit. The adsorbent adsorbs and desorbs the refrigerant in the mixer.

A refrigeration cycle apparatus according to an eleventh aspect is the refrigeration cycle apparatus according to the tenth aspect, in which the mixer includes a permeable member. The permeable member is a member that allows the refrigerant to pass therethrough and does not allow the adsorbent to pass therethrough. The adsorbent adsorbs and desorbs the refrigerant that has passed through the permeable member in the mixer.

A refrigeration cycle apparatus according to a twelfth aspect is the refrigeration cycle apparatus according to any one of the first to eleventh aspects, in which the adsorbent includes a metal-organic framework including a metal ion and an organic ligand.

A refrigeration cycle apparatus according to a thirteenth aspect is the refrigeration cycle apparatus according to any one of the first to twelfth aspects, in which the refrigerant is selected from the group consisting of carbon dioxide, ammonia, and propane.

### BRIEF DESCRIPTION OF THE DRAWINGS

Fig. 1 is a schematic diagram of a hybrid cycle included in a refrigeration cycle apparatus.
Fig. 2 is a graph illustrating the relationship between the adsorption amount of an adsorbent and the pressure of a refrigerant.
Fig. 3 is a graph illustrating the relationship between the adsorption amount of an adsorbent and the enthalpy of a refrigerant.
Fig. 4 is a graph illustrating the relationship between the pressure of a refrigerant and the enthalpy of the refrigerant.
Fig. 5 is a graph illustrating isotherms of a refrigerant adsorbed by an adsorbent.
Fig. 6 is a configuration diagram of a refrigeration cycle apparatus according to a first example.
Fig. 7 is a configuration diagram of a refrigeration cycle apparatus according to a second example.
Fig. 8 is a configuration diagram of a refrigeration cycle apparatus according to a third example.
Fig. 9 is a configuration diagram of a refrigeration cycle apparatus according to a fourth example.
Fig. 10 is a configuration diagram of a refrigeration cycle apparatus according to a fifth example.
Fig. 11 is a configuration diagram of a refrigeration cycle apparatus according to modification A.

### DESCRIPTION OF EMBODIMENTS

### (1) Overall Configuration

A refrigeration cycle apparatus 1 includes a hybrid cycle in which a vapor compression cycle and an adsorption cycle are combined. The vapor compression cycle is a vapor compression refrigeration cycle, and is a heat pump cycle that uses transfer of latent heat generated when a refrigerant evaporates and condenses. The adsorption cycle is an adsorption refrigeration cycle, and is a heat pump cycle that uses transfer of latent heat generated when a refrigerant is adsorbed by an adsorbent and when a refrigerant is desorbed from an adsorbent. The refrigeration cycle apparatus 1 is, for example, an air conditioning apparatus and a refrigeration apparatus.

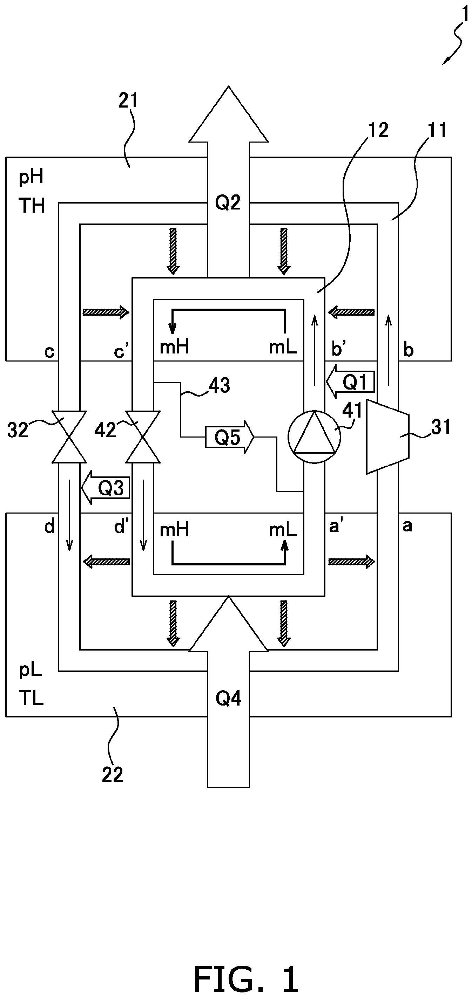

As illustrated in Fig. 1, the refrigeration cycle apparatus 1 includes a refrigerant circuit 11 and an adsorption circuit 12. The refrigerant circuit 11 constitutes a vapor compression cycle in which a refrigerant circulates. The adsorption circuit 12 constitutes an adsorption cycle in which an adsorbent circulates.

The refrigeration cycle apparatus 1 may include only one circuit having the function of at least one of the refrigerant circuit 11 and the adsorption circuit 12. In this case, the refrigeration cycle apparatus 1 may include a circuit in which a mixture of a refrigerant and an adsorbent circulates. Alternatively, the refrigeration cycle apparatus 1 may include a circuit in which only a refrigerant circulates and which includes a mechanism for bringing a circulating refrigerant into contact with an adsorbent. In this case, the adsorbent is not circulated.

The refrigeration cycle apparatus 1 may include two circuits composed of a circuit having the function of the refrigerant circuit 11 and a circuit having the function of the adsorption circuit 12. In this case, the refrigeration cycle apparatus 1 includes a mechanism for bringing the refrigerant circulating in the refrigerant circuit 11 into contact with the adsorbent circulating in the adsorption circuit 12. In Fig. 1, the refrigerant circuit 11 and the adsorption circuit 12 are illustrated as independent circuits for the sake of description.

The refrigeration cycle apparatus 1 includes an adsorption section 21 and a desorption section 22. The adsorption section 21 and the desorption section 22 each include a part of the refrigerant circuit 11 and a part of the adsorption circuit 12. In the adsorption section 21 and the desorption section 22, a refrigerant is able to freely move between the refrigerant circuit 11 and the adsorption circuit 12. An adsorbent is unable to move between the refrigerant circuit 11 and the adsorption circuit 12. In the adsorption section 21, the refrigerant that has flowed into the adsorption circuit 12 from the refrigerant circuit 11 is adsorbed by the adsorbent flowing in the adsorption circuit 12. In the desorption section 22, the refrigerant desorbed from the adsorbent flowing in the adsorption circuit 12 flows into the refrigerant circuit 11 from the adsorption circuit 12.

The refrigerant circuit 11 includes a compressor 31 and an expansion mechanism 32. The compressor 31 compresses the refrigerant circulating in the refrigerant circuit 11. The expansion mechanism 32 decompresses the refrigerant circulating in the refrigerant circuit 11. The compressor 31 is, for example, a rotary compressor. The expansion mechanism 32 is, for example, an electronic expansion valve. In the refrigerant circuit 11, a refrigerant is compressed by the compressor 31, passes through the adsorption section 21, is decompressed by the expansion mechanism 32, passes through the desorption section 22, and is compressed again by the compressor 31.

The refrigerant circuit 11 includes a high-pressure region and a low-pressure region. In the high-pressure region, a refrigerant that has been compressed by the compressor 31 and that has not yet been decompressed by the expansion mechanism 32 flows. In the low-pressure region, a refrigerant that has been decompressed by the expansion mechanism 32 and that has not yet been compressed by the compressor 31 flows. The high-pressure region corresponds to a part of the refrigerant circuit 11 included in the adsorption section 21. The low-pressure region corresponds to a part of the refrigerant circuit 11 included in the desorption section 22.

The refrigerant circulating in the refrigerant circuit 11 is carbon dioxide. The refrigerant may be ammonia or propane.

The adsorption circuit 12 includes a pressurizer 41 and a depressurizer 42. The pressurizer 41 pressurizes the adsorbent circulating in the adsorption circuit 12. The depressurizer 42 depressurizes the adsorbent circulating in the adsorption circuit 12. The pressurizer 41 is, for example, a powder pump. The depressurizer 42 is, for example, a powder valve. In the adsorption circuit 12, an adsorbent is pressurized by the pressurizer 41, passes through the adsorption section 21, is depressurized by the depressurizer 42, passes through the desorption section 22, and is pressurized again by the pressurizer 41. Depending on the configuration of the refrigeration cycle apparatus 1, the adsorption circuit 12 need not include the pressurizer 41 and the depressurizer 42.

The adsorption circuit 12 may further include a heat exchanger 43. The heat exchanger 43 exchanges heat between the upstream side of the pressurizer 41 and the upstream side of the depressurizer 42. The heat exchanger 43 gives a part of the heat of the adsorbent flowing between the adsorption section 21 and the depressurizer 42 to the adsorbent flowing between the desorption section 22 and the pressurizer 41.

The adsorbent circulating in the adsorption circuit 12 includes a metal-organic framework including a metal ion and an organic ligand. A metal-organic framework (MOF) is a porous material that has a very large specific surface and that is obtained by a reaction of a metal ion and an organic ligand. In the MOF, an organic ligand is linked to a metal ion, and thereby a polymer structure having innumerable voids therein is obtained. In the MOF, the void diameter and topology can be adjusted by selecting and combining a metal ion and an organic ligand. In the MOF, the void diameter can be adjusted and a target substance can be selectively adsorbed by selecting and combining a metal ion and an organic ligand. The MOF is used as, for example, a porous material having a function of selectively storing and separating molecules and ions. In the present embodiment, the MOF is used as an adsorbent for adsorbing and desorbing a refrigerant. The MOF includes, for example, MOF-5 and MOF-200. The adsorbent is, for example, a powder of an MOF.

### (2) Operation

The adsorbent adsorbs and desorbs the refrigerant circulating in the refrigerant circuit 11. The adsorbent adsorbs and desorbs the refrigerant in accordance with a change in the pressure of the refrigerant circulating in the refrigerant circuit 11. Specifically, the adsorbent adsorbs the refrigerant under high pressure, and desorbs the refrigerant under low pressure.

It is assumed that the high-pressure region of the refrigerant circuit 11 is filled with a refrigerant having a pressure pH and a temperature TH. It is assumed that the low-pressure region of the refrigerant circuit 11 is filled with a refrigerant having a pressure pL and a temperature TL. The pressure pH is higher than the pressure pL. The temperature TH is higher than the temperature TL. The adsorbent adsorbs the refrigerant in the high-pressure region of the refrigerant circuit 11. The adsorbent desorbs the refrigerant in the low-pressure region of the refrigerant circuit 11. In the adsorption section 21, the refrigerant flowing in the high-pressure region of the refrigerant circuit 11 flows into the adsorption circuit 12 and is adsorbed by the adsorbent. In the desorption section 22, the refrigerant desorbed from the adsorbent flowing in the adsorption circuit 12 flows into the low-pressure region of the refrigerant circuit 11.

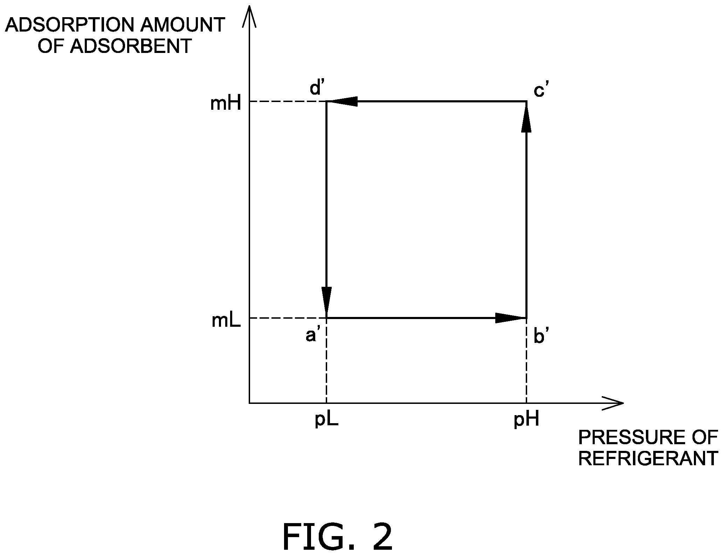

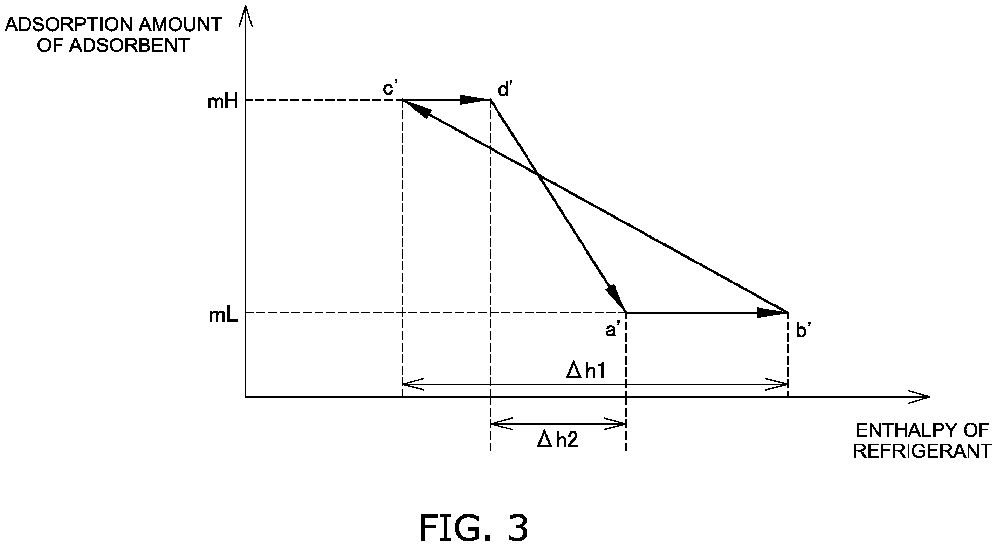

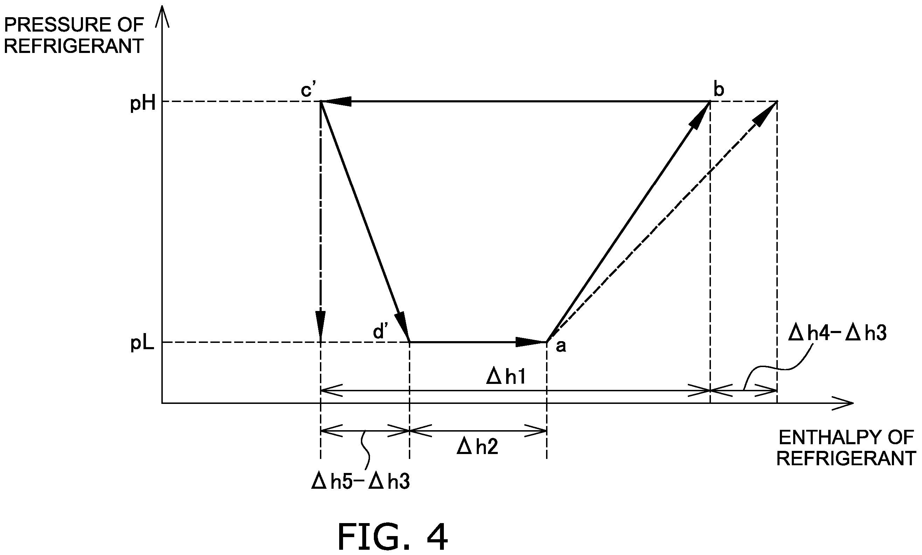

The operation of a heat pump cycle of the refrigeration cycle apparatus 1 will be described with reference to Figs. 1 to 4. Figs. 1 to 4 illustrate a refrigerant cycle a→b→c→d→a in the refrigerant circuit 11 and an adsorbent cycle a'→b'→c'→d'→a' in the adsorption circuit 12. The graph in Fig. 2 illustrates changes in an adsorption amount, which is the mass of the refrigerant adsorbed by the adsorbent per unit mass, and the pressure of the refrigerant adsorbed by the adsorbent in the heat pump cycle. The graph in Fig. 3 illustrates changes in the adsorption amount of the adsorbent and the enthalpy of the refrigerant adsorbed by the adsorbent in the heat pump cycle. The graph in Fig. 4 illustrates changes in the pressure of the refrigerant and the enthalpy of the refrigerant in the heat pump cycle. It is assumed that, in the refrigeration cycle apparatus 1, heat can freely transfer between the refrigerant circuit 11 and the adsorption circuit 12.

In the refrigerant circuit 11, the refrigerant is compressed by the compressor 31 (a→b). In the adsorption circuit 12, the adsorbent is pressurized by the pressurizer 41 (a'→b'). Accordingly, the pressures of the refrigerant and adsorbent rise from pL to pH. In this process, a part Q1 of heat generated by adiabatic compression of the refrigerant is given to the adsorbent. In other words, the refrigerant gives heat to the adsorbent while being compressed, thereby being cooled. As a result, the temperatures of the refrigerant and adsorbent rise from TL to TH.

Subsequently, in the adsorption section 21, the refrigerant is gradually adsorbed by the adsorbent while releasing heat Q2 (b'→c'). In this process, the adsorption amount of the adsorbent increases from mL to mH. As a result, in the adsorption section 21, most of the refrigerant in the refrigerant circuit 11 is adsorbed by the adsorbent in the adsorption circuit 12. As indicated by hatched arrows in the adsorption section 21 in Fig. 1, in the adsorption section 21, the refrigerant in the refrigerant circuit 11 moves to the adsorption circuit 12 and is adsorbed by the adsorbent.

Subsequently, in the adsorption circuit 12, the adsorbent is depressurized by the depressurizer 42 (c'→d'). Accordingly, the pressure of the adsorbent drops from pH to pL. In this process, isenthalpic expansion of the refrigerant desorbed from the adsorbent causes the temperature of the adsorbent to drop from TH to TL. Due to the difference in temperature between the refrigerant and the adsorbent, the depressurized adsorbent in the adsorption circuit 12 is cooled to give heat Q3 to the refrigerant in the refrigerant circuit 11. The heat exchanger 43 causes heat Q5 to be given from the adsorbent that has not yet been depressurized to the adsorbent that has not yet been pressurized.

Subsequently, in the desorption section 22, the refrigerant is gradually desorbed from the adsorbent while absorbing heat Q4 (d→a'). In this process, the adsorption amount of the adsorbent decreases from mH to mL. As a result, most of the refrigerant adsorbed by the adsorbent in the adsorption circuit 12 is desorbed and flows into the refrigerant circuit 11. As indicated by hatched arrows in the desorption section 22 in Fig. 1, in the desorption section 22, the refrigerant desorbed from the adsorbent in the adsorption circuit 12 moves to the refrigerant circuit 11.

As illustrated in Fig. 2, in an adsorption process (b'→c') in which the refrigerant is adsorbed by the adsorbent, the pressure is pH, and the adsorption amount of the adsorbent increases from mL to mH. In a desorption process (d'→a') in which the refrigerant is desorbed from the adsorbent, the pressure is pL, and the adsorption amount of the adsorbent decreases from mH to mL. As illustrated in Fig. 3, the enthalpy decreases by Δh1 in the adsorption process. In the desorption process, the enthalpy increases by Δh2. In the adsorption process, the heat Q2 released from the adsorption section 21 is proportional to Δh1. In the desorption process, the heat Q4 absorbed by the desorption section 22 is proportional to Δh2.

The amount of change in the enthalpy resulting from heat exchange by the heat exchanger 43 is represented by Δh3. In the pressurization process of the adsorbent (a'→b'), the amount of change in the enthalpy resulting from the adsorbent being heated is represented by Δh4. In the depressurization process of the adsorbent (c'→d'), the amount of change in the enthalpy resulting from the adsorbent being cooled is represented by Δh5. As illustrated in Fig. 4, the amount of change in the total enthalpy in the compression process of the refrigerant (a→b) is represented by Δh4 - Δh3. The amount of change in the total enthalpy in the depressurization process of the adsorbent (c'→d') is represented by Δh5 - Δh3. In Fig. 4, a change in the state of the refrigerant during adiabatic compression is indicated by a broken-line arrow, and a change in the state of the refrigerant during isenthalpic expansion is indicated by a dot-and-dash-line arrow.

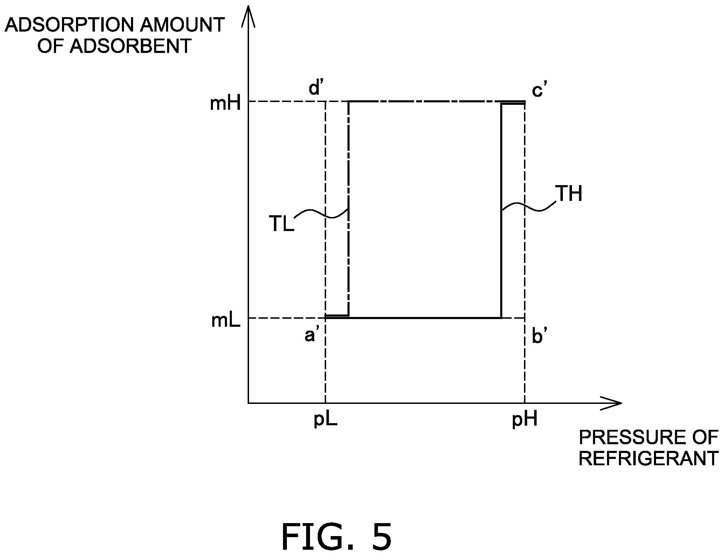

Fig. 5 illustrates isotherms during adsorption and desorption of the refrigerant that are suitable for the heat pump cycle of the refrigeration cycle apparatus 1. In Fig. 5, the isotherm at the temperature TH is indicated by a solid line, and the isotherm at the temperature TL is indicated by a dot-and-dash line. In the adsorption process (b'→c'), when the refrigerant is adsorbed by the adsorbent at the pressure pH and the temperature TH, the isotherm at the temperature TH is preferably such that the adsorption amount of the adsorbent increases from mL to mH at a pressure between pL and pH. In the desorption process (d'→a'), when the refrigerant is desorbed from the adsorbent at the pressure pL and the temperature TL, the isotherm at the temperature TL is preferably such that the adsorption amount of the adsorbent decreases from mH to mL at a pressure between pL and pH.

### (3) Detailed Configuration

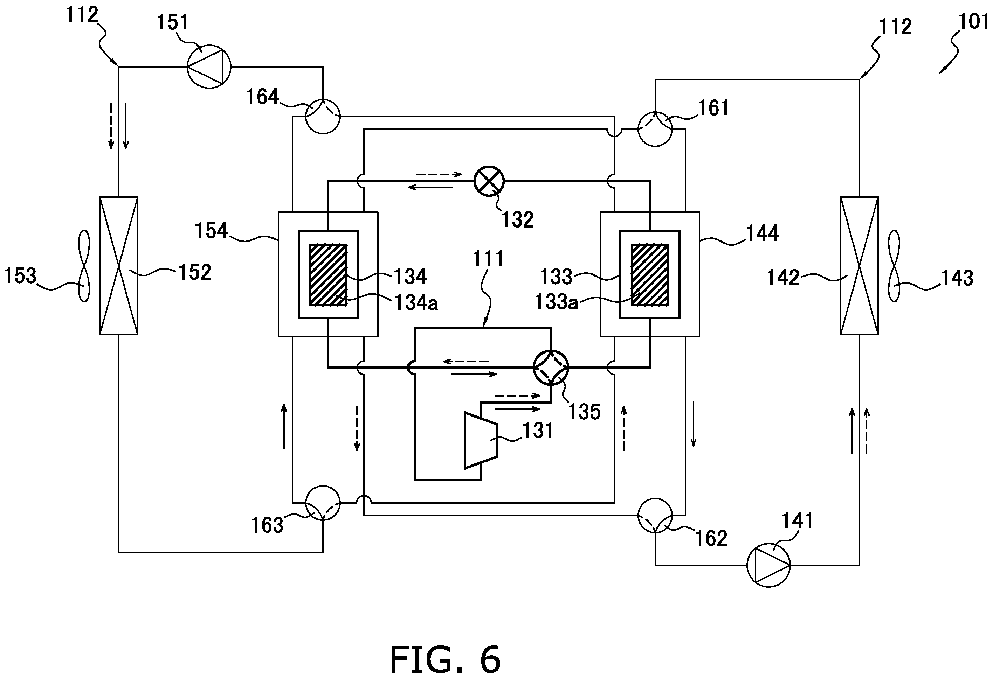

First to fifth examples, which are specific configurations of the refrigeration cycle apparatus 1 illustrated in Fig. 1, will be described with reference to Figs. 6 to 10.

### (3-1) First Example

As illustrated in Fig. 6, a refrigeration cycle apparatus 101 of the present example includes a first refrigerant circuit 111 in which a primary refrigerant circulates and a second refrigerant circuit 112 in which a secondary refrigerant circulates. In Fig. 6, the first refrigerant circuit 111 is drawn by a thick line. The first refrigerant circuit 111 corresponds to the refrigerant circuit 11 in Fig. 1. The refrigeration cycle apparatus 101 does not include a circuit in which an adsorbent circulates and which corresponds to the adsorption circuit 12 in Fig. 1. In the refrigeration cycle apparatus 101, an adsorbent is provided in the first refrigerant circuit 111. The secondary refrigerant is, for example, water.

The first refrigerant circuit 111 includes a compressor 131, an expansion mechanism 132, a first adsorber 133, a second adsorber 134, and a switcher 135. The compressor 131 corresponds to the compressor 31 in Fig. 1. The expansion mechanism 132 corresponds to the expansion mechanism 32 in Fig. 1.

The first adsorber 133 includes a first adsorbent 133a therein. The primary refrigerant that passes through the first adsorber 133 contacts the first adsorbent 133a. The first adsorbent 133a is accommodated in a container formed of a metal mesh, and is fixed inside the first adsorber 133, for example.

The second adsorber 134 includes a second adsorbent 134a therein. The primary refrigerant that passes through the second adsorber 134 contacts the second adsorbent 134a. The second adsorbent 134a is accommodated in a container formed of a metal mesh, and is fixed inside the second adsorber 134, for example.

The switcher 135 switches the flow direction of the primary refrigerant circulating in the first refrigerant circuit 111. The switcher 135 is, for example, a four-way switching valve. The switcher 135 switches between a first mode of the flow direction indicated by solid lines in Fig. 6 and a second mode of the flow direction indicated by broken lines in Fig. 6. In the first mode, the discharge side of the compressor 131 is connected to the first adsorber 133, and the suction side of the compressor 131 is connected to the second adsorber 134. In the second mode, the discharge side of the compressor 131 is connected to the second adsorber 134, and the suction side of the compressor 131 is connected to the first adsorber 133.

The second refrigerant circuit 112 includes a first fluid pump 141, a first heat exchanger 142, a first fan 143, a first tank 144, a second fluid pump 151, a second heat exchanger 152, a second fan 153, a second tank 154, and four channel changers 161 to 164.

The first fluid pump 141 pumps the secondary refrigerant to the first heat exchanger 142. The first heat exchanger 142 exchanges heat between the secondary refrigerant and air. The first fan 143 sends the air that has exchanged heat in the first heat exchanger 142 to a predetermined place. The first tank 144 includes the first adsorber 133 therein, and exchanges heat between the primary refrigerant and the secondary refrigerant.

The second fluid pump 151 pumps the secondary refrigerant to the second heat exchanger 152. The second heat exchanger 152 exchanges heat between the secondary refrigerant and air. The second fan 153 sends the air that has exchanged heat in the second heat exchanger 152 to a predetermined place. The second tank 154 includes the second adsorber 134 therein, and exchanges heat between the primary refrigerant and the secondary refrigerant.

The channel changers 161 to 164 switch the connection state of the second refrigerant circuit 112 to change the channel through which the secondary refrigerant flows. The channel changers 161 to 164 are, for example, three-way switching valves. The channel changers 161 to 164 switch between a third mode of the connection state indicated by solid lines in Fig. 6 and a fourth mode of the connection state indicated by broken lines in Fig. 6.

The second refrigerant circuit 112 includes two circuits independent of each other in each of the third mode and the fourth mode. The two circuits of the second refrigerant circuit 112 are referred to as a first circulation circuit and a second circulation circuit. In Fig. 6, the direction in which the secondary refrigerant flows in the third mode is indicated by solid lines, and the direction in which the secondary refrigerant flows in the fourth mode is indicated by broken lines.

In the third mode, the first circulation circuit is a circuit in which the first fluid pump 141, the first heat exchanger 142, the channel changer 161, the first tank 144, and the channel changer 162 are connected to each other. In the third mode, the second circulation circuit is a circuit in which the second fluid pump 151, the second heat exchanger 152, the channel changer 163, the second tank 154, and the channel changer 164 are connected to each other.

In the fourth mode, the first circulation circuit is a circuit in which the first fluid pump 141, the first heat exchanger 142, the channel changer 161, the second tank 154, and the channel changer 162 are connected to each other. In the fourth mode, the second circulation circuit is a circuit in which the second fluid pump 151, the second heat exchanger 152, the channel changer 163, the first tank 144, and the channel changer 164 are connected to each other.

A description will be given of a case where the refrigeration cycle apparatus 101 is an air conditioning apparatus. It is assumed that the first heat exchanger 142 is an indoor heat exchanger and the second heat exchanger 152 is an outdoor heat exchanger. When the refrigeration cycle apparatus 101 performs a heating operation, the secondary refrigerant heated by heat exchange with the primary refrigerant passes through the first heat exchanger 142. Thus, the secondary refrigerant circulating in the first circulation circuit including the first heat exchanger 142 needs to come into contact with, of the first adsorber 133 and the second adsorber 134, an adsorber including an adsorbent that adsorbs the primary refrigerant. The air heated by heat exchange with the secondary refrigerant in the first heat exchanger 142 is sent to a predetermined place by the first fan 143.

In the first mode, a high-pressure primary refrigerant is introduced into the first adsorber 133, and the primary refrigerant is adsorbed by the first adsorbent 133a. In the first mode, a low-pressure primary refrigerant is introduced into the second adsorber 134, and the primary refrigerant is desorbed from the second adsorbent 134a.

In the second mode, a high-pressure primary refrigerant is introduced into the second adsorber 134, and the primary refrigerant is adsorbed by the second adsorbent 134a. In the second mode, a low-pressure primary refrigerant is introduced into the first adsorber 133, and the primary refrigerant is desorbed from the first adsorbent 133a.

Thus, in the first mode, it is necessary to switch the mode to the third mode in which the secondary refrigerant passes through the first tank 144 including the first adsorber 133 and the first heat exchanger 142. In the second mode, it is necessary to switch the mode to the fourth mode in which the secondary refrigerant passes through the second tank 154 including the second adsorber 134 and the first heat exchanger 142.

When the refrigeration cycle apparatus 101 is operated in the first mode and the third mode, the adsorption amount of the first adsorbent 133a in the first adsorber 133 reaches the maximum value mH, and the first adsorbent 133a becomes capable of adsorbing less primary refrigerant. Thereafter, upon switching from the first mode to the second mode, the primary refrigerant is adsorbed by the second adsorbent 134a in the second adsorber 134, and the primary refrigerant is desorbed from the first adsorbent 133a in the first adsorber 133. Thus, after the switching to the second mode, it is necessary to switch the mode from the third mode to the fourth mode in which the secondary refrigerant passes through the second tank 154 including the second adsorber 134 and the first heat exchanger 142.

When the refrigeration cycle apparatus 101 is operated in the second mode and the fourth mode, the adsorption amount of the second adsorbent 134a in the second adsorber 134 reaches the maximum value mH, and the second adsorbent 134a becomes capable of adsorbing less primary refrigerant. Thereafter, upon switching from the second mode to the first mode, the primary refrigerant is adsorbed by the first adsorbent 133a in the first adsorber 133, and the primary refrigerant is desorbed from the second adsorbent 134a in the second adsorber 134. Thus, after the switching to the first mode, it is necessary to switch the mode from the fourth mode to the third mode in which the secondary refrigerant passes through the first tank 144 including the first adsorber 133 and the first heat exchanger 142.

Thus, as a result of alternately switching between the first mode and the second mode, the primary refrigerant can be adsorbed by the adsorbent in either one of the first adsorber 133 and the second adsorber 134, and the primary refrigerant can be constantly heated. In addition, as a result of alternately switching between the third mode and the fourth mode in accordance with switching between the first mode and the second mode, the secondary refrigerant heated by heat exchange with the primary refrigerant can be constantly supplied to the first heat exchanger 142.

### (3-2) Second Example

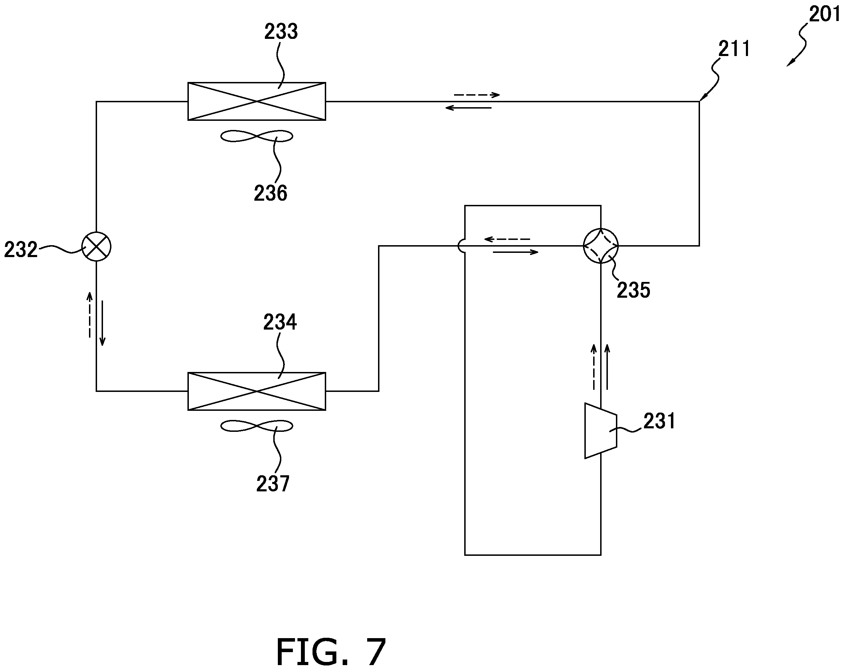

As illustrated in Fig. 7, a refrigeration cycle apparatus 201 of the present example includes a refrigerant circuit 211 in which a refrigerant circulates. The refrigerant circuit 211 has the functions of both the refrigerant circuit 11 and the adsorption circuit 12 in Fig. 1. An adsorbent circulates in the refrigerant circuit 211 together with the refrigerant. In other words, in the refrigeration cycle apparatus 201, a mixture of the refrigerant and the adsorbent circulates in the refrigerant circuit 211.

The refrigerant circuit 211 includes a compressor 231, an expansion mechanism 232, a first heat exchanger 233, a second heat exchanger 234, a switcher 235, a first fan 236, and a second fan 237. The compressor 231 has the functions of both the compressor 31 and the pressurizer 41 in Fig. 1. The expansion mechanism 232 has the functions of both the expansion mechanism 32 and the depressurizer 42 in Fig. 1.

The switcher 235 switches the flow direction of the mixture of the refrigerant and the adsorbent circulating in the refrigerant circuit 211. The switcher 235 is, for example, a four-way switching valve. The switcher 235 switches between a first mode of the flow direction indicated by solid lines in Fig. 7 and a second mode of the flow direction indicated by broken lines in Fig. 7. In the first mode, the discharge side of the compressor 231 is connected to the first heat exchanger 233, and the suction side of the compressor 231 is connected to the second heat exchanger 234. In the second mode, the discharge side of the compressor 231 is connected to the second heat exchanger 234, and the suction side of the compressor 231 is connected to the first heat exchanger 233.

In the first heat exchanger 233, a high-pressure refrigerant is adsorbed by the adsorbent in the first mode, and a low-pressure refrigerant is desorbed from the adsorbent in the second mode. In the second heat exchanger 234, a low-pressure refrigerant is desorbed from the adsorbent in the first mode, and a high-pressure refrigerant is adsorbed by the adsorbent in the second mode. In the first heat exchanger 233 and the second heat exchanger 234, the refrigerant is adsorbed by the adsorbent so as to be heated, or the refrigerant is desorbed from the adsorbent so as to be cooled. As a result, heat exchange is performed between the heated or cooled refrigerant and air in the first heat exchanger 233 and the second heat exchanger 234. The first fan 236 sends the air that has exchanged heat in the first heat exchanger 233 to a predetermined place. The second fan 237 sends the air that has exchanged heat in the second heat exchanger 234 to a predetermined place.

As described above, in the refrigeration cycle apparatus 201, in the process in which the mixture of the refrigerant and the adsorbent circulates in the refrigerant circuit 211, the refrigerant is heated or cooled, and the air that has exchanged heat with the refrigerant is sent to a predetermined place. A description will be given of a case where the refrigeration cycle apparatus 201 is an air conditioning apparatus. It is assumed that the first heat exchanger 233 is an indoor heat exchanger and the second heat exchanger 234 is an outdoor heat exchanger. When the refrigeration cycle apparatus 201 performs a heating operation, switching to the first mode causes the refrigerant to be adsorbed by the adsorbent and to be heated in the first heat exchanger 233. The air heated by heat exchange with the refrigerant is sent to a predetermined place by the first fan 236.

### (3-3) Third Example

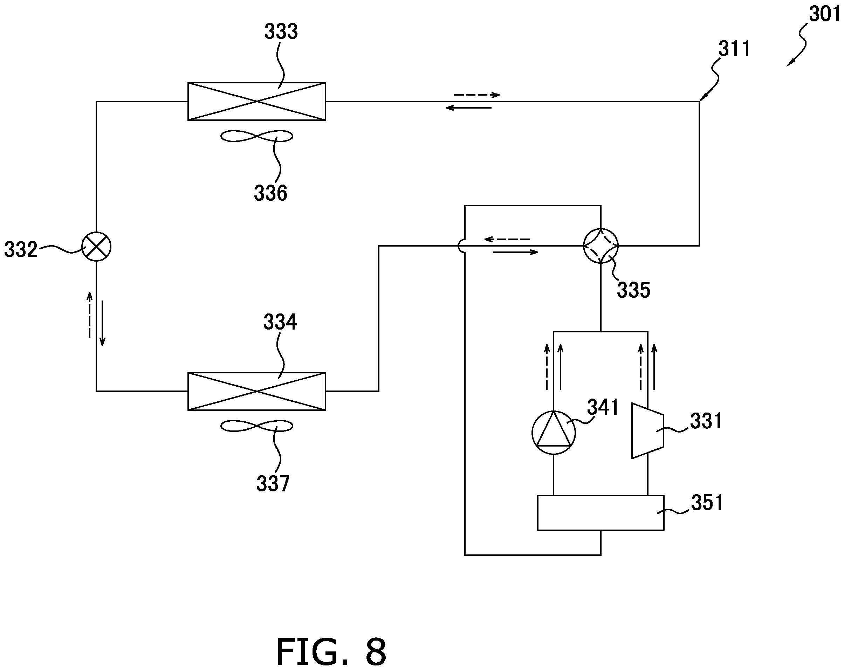

As illustrated in Fig. 8, a refrigeration cycle apparatus 301 of the present example includes a refrigerant circuit 311 in which a refrigerant circulates. The refrigerant circuit 311 has the functions of both the refrigerant circuit 11 and the adsorption circuit 12 in Fig. 1. An adsorbent flows in a part of the refrigerant circuit 311 together with the refrigerant. In other words, in the refrigeration cycle apparatus 301, a mixture of the refrigerant and the adsorbent circulates in the refrigerant circuit 311.

The refrigerant circuit 311 includes a compressor 331, an expansion mechanism 332, a first heat exchanger 333, a second heat exchanger 334, a switcher 335, a first fan 336, a second fan 337, a pressurizer 341, and a separator 351. The compressor 331 corresponds to the compressor 31 in Fig. 1. The pressurizer 341 corresponds to the pressurizer 41 in Fig. 1. The expansion mechanism 332 has the functions of both the expansion mechanism 32 and the depressurizer 42 in Fig. 1.

The switcher 335 switches the flow direction of the mixture of the refrigerant and the adsorbent circulating in the refrigerant circuit 311. The switcher 335 is, for example, a four-way switching valve. The switcher 335 switches between a first mode of the flow direction indicated by solid lines in Fig. 8 and a second mode of the flow direction indicated by broken lines in Fig. 8. In the first mode, the discharge sides of the compressor 331 and the pressurizer 341 are connected to the first heat exchanger 333, and the suction sides of the compressor 331 and the pressurizer 341 are connected to the second heat exchanger 334. In the second mode, the discharge sides of the compressor 331 and the pressurizer 341 are connected to the second heat exchanger 334, and the suction sides of the compressor 331 and the pressurizer 341 are connected to the first heat exchanger 333.

The separator 351 is provided between the switcher 335 and the suction sides of the compressor 331 and the pressurizer 341.

The separator 351 separates a mixture of a refrigerant in the low-pressure region and an adsorbent circulating in the refrigerant circuit 311 into the refrigerant and the adsorbent. The separator 351 performs separation into the refrigerant and the adsorbent by, for example, centrifugal separation. The refrigerant separated by the separator 351 is compressed by the compressor 331. The adsorbent separated by the separator 351 is pressurized by the pressurizer 341. As illustrated in Fig. 8, the adsorbent pressurized by the pressurizer 341 merges with the refrigerant compressed by the compressor 331. After being merged, the refrigerant and the adsorbent are sent to the switcher 335. In this way, the refrigerant circuit 311 branches at the separator 351 and merges between the compressor 331/pressurizer 341 and the switcher 335.

In the first heat exchanger 333, a high-pressure refrigerant is adsorbed by the adsorbent in the first mode, and a low-pressure refrigerant is desorbed from the adsorbent in the second mode. In the second heat exchanger 334, a low-pressure refrigerant is desorbed from the adsorbent in the first mode, and a high-pressure refrigerant is adsorbed by the adsorbent in the second mode. In the first heat exchanger 333 and the second heat exchanger 334, the refrigerant is adsorbed by the adsorbent so as to be heated, or the refrigerant is desorbed from the adsorbent so as to be cooled. As a result, heat exchange is performed between the heated or cooled refrigerant and air in the first heat exchanger 333 and the second heat exchanger 334. The first fan 336 sends the air that has exchanged heat in the first heat exchanger 333 to a predetermined place. The second fan 337 sends the air that has exchanged heat in the second heat exchanger 334 to a predetermined place.

As described above, in the refrigeration cycle apparatus 301, in the process in which the mixture of the refrigerant and the adsorbent circulates in the refrigerant circuit 311, the refrigerant is heated or cooled, and the air that has exchanged heat with the refrigerant is sent to a predetermined place. A description will be given of a case where the refrigeration cycle apparatus 301 is an air conditioning apparatus. It is assumed that the first heat exchanger 333 is an indoor heat exchanger and the second heat exchanger 334 is an outdoor heat exchanger. When the refrigeration cycle apparatus 301 performs a heating operation, switching to the first mode causes the refrigerant to be adsorbed by the adsorbent and to be heated in the first heat exchanger 333. The air heated by heat exchange with the refrigerant is sent to a predetermined place by the first fan 336.

### (3-4) Fourth Example

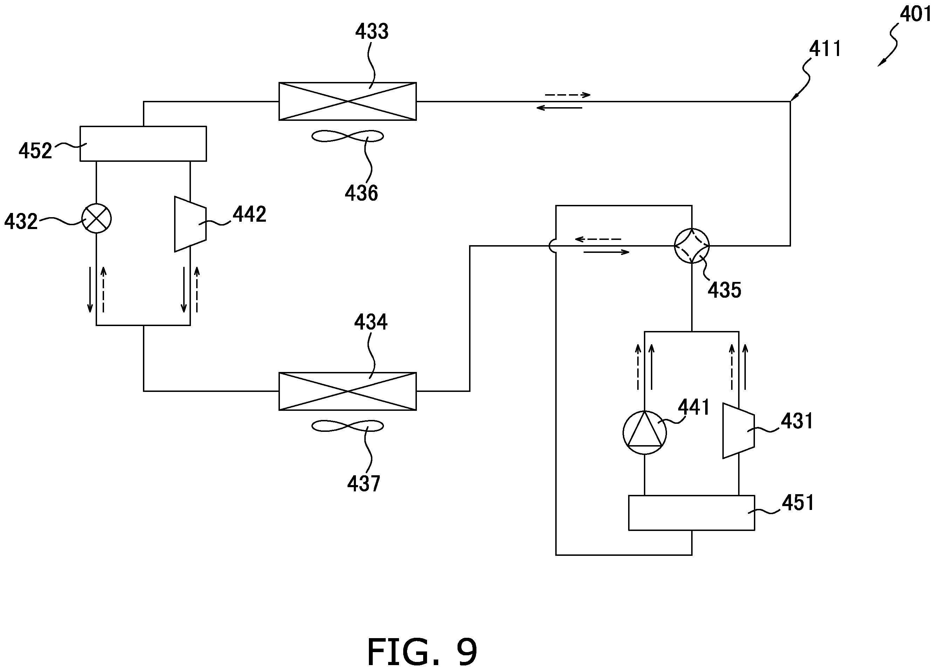

As illustrated in Fig. 9, a refrigeration cycle apparatus 401 of the present example includes a refrigerant circuit 411 in which a refrigerant circulates. The refrigerant circuit 411 has the functions of both the refrigerant circuit 11 and the adsorption circuit 12 in Fig. 1. An adsorbent flows in a part of the refrigerant circuit 411 together with the refrigerant. In other words, in the refrigeration cycle apparatus 401, a mixture of the refrigerant and the adsorbent circulates in the refrigerant circuit 411.

The refrigerant circuit 411 includes a compressor 431, an expansion mechanism 432, a first heat exchanger 433, a second heat exchanger 434, a switcher 435, a first fan 436, a second fan 437, a pressurizer 441, a depressurizer 442, a first separator 451, and a second separator 452. The compressor 431 corresponds to the compressor 31 in Fig. 1. The pressurizer 441 corresponds to the pressurizer 41 in Fig. 1. The expansion mechanism 432 corresponds to the expansion mechanism 32 in Fig. 1. The depressurizer 442 corresponds to the depressurizer 42 in Fig. 1.

The switcher 435 switches the flow direction of the mixture of the refrigerant and the adsorbent circulating in the refrigerant circuit 411. The switcher 435 is, for example, a four-way switching valve. The switcher 435 switches between a first mode of the flow direction indicated by solid lines in Fig. 9 and a second mode of the flow direction indicated by broken lines in Fig. 9. In the first mode, the discharge sides of the compressor 431 and the pressurizer 441 are connected to the first heat exchanger 433, and the suction sides of the compressor 431 and the pressurizer 441 are connected to the second heat exchanger 434. In the first mode, the suction sides of the expansion mechanism 432 and the depressurizer 442 are connected to the first heat exchanger 433, and the discharge sides of the expansion mechanism 432 and the depressurizer 442 are connected to the second heat exchanger 434. In the second mode, the discharge sides of the compressor 431 and the pressurizer 441 are connected to the second heat exchanger 434, and the suction sides of the compressor 431 and the pressurizer 441 are connected to the first heat exchanger 433. In the second mode, the suction sides of the expansion mechanism 432 and the depressurizer 442 are connected to the second heat exchanger 434, and the discharge sides of the expansion mechanism 432 and the depressurizer 442 are connected to the first heat exchanger 433.

The first separator 451 is provided between the switcher 435 and the suction sides of the compressor 431 and the pressurizer 441. The second separator 452 is provided between the first heat exchanger 433 and the suction sides of the expansion mechanism 432 and the depressurizer 442 in the first mode.

The first separator 451 separates a mixture of a refrigerant in the low-pressure region and an adsorbent circulating in the refrigerant circuit 411 into the refrigerant and the adsorbent. The first separator 451 performs separation into the refrigerant and the adsorbent by, for example, centrifugal separation. The refrigerant separated by the first separator 451 is compressed by the compressor 431. The adsorbent separated by the first separator 451 is pressurized by the pressurizer 441. As illustrated in Fig. 9, the adsorbent pressurized by the pressurizer 441 merges with the refrigerant compressed by the compressor 431. After the merging, the refrigerant and the adsorbent are sent to the switcher 435. In this way, the refrigerant circuit 411 branches at the first separator 451 and merges between the compressor 431/pressurizer 441 and the switcher 435.

The second separator 452 separates a mixture of a refrigerant in the high-pressure region and an adsorbent circulating in the refrigerant circuit 411 into the refrigerant and the adsorbent in the first mode. The second separator 452 performs separation into the refrigerant and the adsorbent by, for example, centrifugal separation. The refrigerant separated by the second separator 452 is decompressed by the expansion mechanism 432. The adsorbent separated by the second separator 452 is depressurized by the depressurizer 442. As illustrated in Fig. 9, the adsorbent depressurized by the depressurizer 442 merges with the refrigerant decompressed by the expansion mechanism 432. After the merging, the refrigerant and the adsorbent are sent to the second heat exchanger 434. In this way, the refrigerant circuit 411 branches at the second separator 452 and merges between the expansion mechanism 432/depressurizer 442 and the second heat exchanger 434 in the first mode. In the second mode, the depressurizer 442 is closed, and the mixture of the refrigerant and the adsorbent is decompressed by the expansion mechanism 432 and then sent to the first heat exchanger 433 through the second separator 452.

In the first heat exchanger 433, a high-pressure refrigerant is adsorbed by the adsorbent in the first mode, and a low-pressure refrigerant is desorbed from the adsorbent in the second mode. In the second heat exchanger 434, a low-pressure refrigerant is desorbed from the adsorbent in the first mode, and a high-pressure refrigerant is adsorbed by the adsorbent in the second mode. In the first heat exchanger 433 and the second heat exchanger 434, the refrigerant is adsorbed by the adsorbent so as to be heated, or the refrigerant is desorbed from the adsorbent so as to be cooled. As a result, heat exchange is performed between the heated or cooled refrigerant and air in the first heat exchanger 433 and the second heat exchanger 434. The first fan 436 sends the air that has exchanged heat in the first heat exchanger 433 to a predetermined place. The second fan 437 sends the air that has exchanged heat in the second heat exchanger 434 to a predetermined place.

As described above, in the refrigeration cycle apparatus 401, in the process in which the mixture of the refrigerant and the adsorbent circulates in the refrigerant circuit 411, the refrigerant is heated or cooled, and the air that has exchanged heat with the refrigerant is sent to a predetermined place. A description will be given of a case where the refrigeration cycle apparatus 401 is an air conditioning apparatus. It is assumed that the first heat exchanger 433 is an indoor heat exchanger and the second heat exchanger 434 is an outdoor heat exchanger. When the refrigeration cycle apparatus 401 performs a heating operation, switching to the first mode causes the refrigerant to be adsorbed by the adsorbent and to be heated in the first heat exchanger 433. The air heated by heat exchange with the refrigerant is sent to a predetermined place by the first fan 436.

### (3-5) Fifth Example

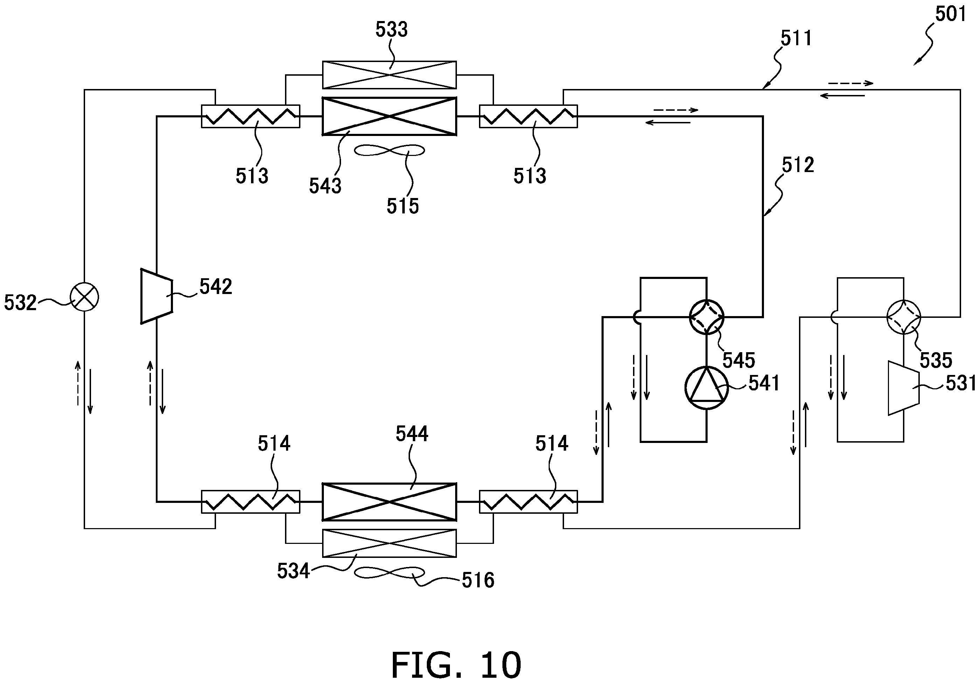

As illustrated in Fig. 10, a refrigeration cycle apparatus 501 of the present example includes a refrigerant circuit 511 in which a refrigerant circulates, an adsorption circuit 512 in which an adsorbent circulates, a pair of first mixers 513, a pair of second mixers 514, a first fan 515, and a second fan 516. The refrigerant circuit 511 corresponds to the refrigerant circuit 11 in Fig. 1. The adsorption circuit 512 corresponds to the adsorption circuit 12 in Fig. 1. In Fig. 10, the adsorption circuit 512 is drawn by a thick line.

The refrigerant circuit 511 includes a compressor 531, an expansion mechanism 532, a first heat exchanger 533, a second heat exchanger 534, and a first switcher 535. The compressor 531 corresponds to the compressor 31 in Fig. 1. The expansion mechanism 532 corresponds to the expansion mechanism 32 in Fig. 1.

The first switcher 535 switches the flow direction of a refrigerant circulating in the refrigerant circuit 511. The first switcher 535 is, for example, a four-way switching valve. The first switcher 535 switches between a first mode of the flow direction indicated by solid lines in Fig. 10 and a second mode of the flow direction indicated by broken lines in Fig. 10. In the first mode, the discharge side of the compressor 531 is connected to the first heat exchanger 533, and the suction side of the compressor 531 is connected to the second heat exchanger 534. In the second mode, the discharge side of the compressor 531 is connected to the second heat exchanger 534, and the suction side of the compressor 531 is connected to the first heat exchanger 533.

The adsorption circuit 512 includes a pressurizer 541, a depressurizer 542, a third heat exchanger 543, a fourth heat exchanger 544, and a second switcher 545. The pressurizer 541 corresponds to the pressurizer 41 in Fig. 1. The depressurizer 542 corresponds to the depressurizer 42 in Fig. 1.

The second switcher 545 switches the flow direction of an adsorbent circulating in the adsorption circuit 512. The second switcher 545 is, for example, a four-way switching valve. The second switcher 545 switches between the first mode of the flow direction indicated by the solid lines in Fig. 10 and the second mode of the flow direction indicated by the broken lines in Fig. 10. In the first mode, the discharge side of the pressurizer 541 is connected to the third heat exchanger 543, and the suction side of the pressurizer 541 is connected to the fourth heat exchanger 544. In the second mode, the discharge side of the pressurizer 541 is connected to the fourth heat exchanger 544, and the suction side of the pressurizer 541 is connected to the third heat exchanger 543. The second switcher 545 switches between the first mode and the second mode in conjunction with the first switcher 535.

The first mixers 513 and the second mixers 514 mix the refrigerant flowing in the refrigerant circuit 511 and the adsorbent flowing in the adsorption circuit 512. The pair of first mixers 513 are provided on the upstream side and the downstream side of the first heat exchanger 533 and the third heat exchanger 543. The pair of second mixers 514 are provided on the upstream side and the downstream side of the second heat exchanger 534 and the fourth heat exchanger 544.

The first mixers 513 and the second mixers 514 each include, for example, a permeable member that allows a refrigerant to pass therethrough and does not allow an adsorbent to pass therethrough. The permeable member is, for example, a gas permeable film. In this case, the inside of each of the first mixers 513 and the second mixers 514 is partitioned by the permeable member into a space which is a part of the refrigerant circuit 511 and a space which is a part of the adsorption circuit 512. In the first mixers 513 and the second mixers 514, the refrigerant flowing in the refrigerant circuit 511 passes through the permeable member and come into contact with the adsorbent flowing in the adsorption circuit 512. On the other hand, in the first mixers 513 and the second mixers 514, the adsorbent flowing in the adsorption circuit 512 is unable to pass through the permeable member. Accordingly, in the first mixers 513 and the second mixers 514, the adsorbent adsorbs and desorbs the refrigerant that has passed through the permeable member.

In the first mixers 513, a high-pressure refrigerant is adsorbed by the adsorbent in the first mode, and a low-pressure refrigerant is desorbed from the adsorbent in the second mode. In the second mixers 514, a low-pressure refrigerant is desorbed from the adsorbent in the first mode, and a high-pressure refrigerant is adsorbed by the adsorbent in the second mode. In the first mixers 513 and the second mixers 514, the refrigerant is adsorbed by the adsorbent and thereby the refrigerant and the adsorbent are heated, or the refrigerant is desorbed from the adsorbent and thereby the refrigerant and the adsorbent are cooled. As a result, heat exchange is performed between the heated or cooled refrigerant and adsorbent and air in the first heat exchanger 533, the second heat exchanger 534, the third heat exchanger 543, and the fourth heat exchanger 544.

In the first mode, heat exchange between the heated refrigerant and air is performed in the first heat exchanger 533, and heat exchange between the heated adsorbent and air is performed in the third heat exchanger 543. In the first mode, heat exchange between the cooled refrigerant and air is performed in the second heat exchanger 534, and heat exchange between the cooled adsorbent and air is performed in the fourth heat exchanger 544.

In the second mode, heat exchange between the cooled refrigerant and air is performed in the first heat exchanger 533, and heat exchange between the cooled adsorbent and air is performed in the third heat exchanger 543. In the second mode, heat exchange between the heated refrigerant and air is performed in the second heat exchanger 534, and heat exchange between the heated adsorbent and air is performed in the fourth heat exchanger 544.

The first fan 515 sends the air that has exchanged heat in the first heat exchanger 533 and the third heat exchanger 543 to a predetermined place. The second fan 516 sends the air that has exchanged heat in the second heat exchanger 534 and the fourth heat exchanger 544 to a predetermined place.

The pair of first mixers 513, the first fan 515, the first heat exchanger 533, and the third heat exchanger 543 correspond to the adsorption section 21 in Fig. 1 in the first mode, and correspond to the desorption section 22 in Fig. 1 in the second mode. The pair of second mixers 514, the second fan 516, the second heat exchanger 534, and the fourth heat exchanger 544 correspond to the desorption section 22 in Fig. 1 in the first mode, and correspond to the adsorption section 21 in Fig. 1 in the second mode.

As described above, in the refrigeration cycle apparatus 501, in the process in which the refrigerant circulates in the refrigerant circuit 511 and the adsorbent circulates in the adsorption circuit 512, the refrigerant and the adsorbent are heated or cooled, and the air that has exchanged heat with the refrigerant and the adsorbent is sent to a predetermined place. A description will be given of a case where the refrigeration cycle apparatus 501 is an air conditioning apparatus. It is assumed that the first heat exchanger 533 and the third heat exchanger 543 are indoor heat exchangers and the second heat exchanger 534 and the fourth heat exchanger 544 are outdoor heat exchangers. When the refrigeration cycle apparatus 501 performs a heating operation, switching to the first mode causes the refrigerant to be adsorbed by the adsorbent and causes the refrigerant and the adsorbent to be heated in the first mixers 513. The air heated by heat exchange with the refrigerant and the adsorbent is sent to a predetermined place by the first fan 515.

### (4) Features

The refrigeration cycle apparatus 1 has a lower operating pressure than an existing refrigeration cycle apparatus that has a vapor compression refrigeration cycle and does not have an adsorbent. For example, when the refrigerant is carbon dioxide, the operating pressure of the existing refrigeration cycle apparatus is about 10 MPa, whereas the operating pressure of the refrigeration cycle apparatus 1 is about 1.5 MPa. An operating pressure is the pressure of a compressed refrigerant in a refrigeration cycle. As the operating pressure increases, the mechanical work load of the compressor increases, and the withstand pressure (design pressure) required for members constituting the refrigerant circuit, such as the casing of the compressor, increases. Thus, as the operating pressure increases, the cost of electric power for driving the compressor and the cost of members constituting the system tend to increase. Thus, the refrigeration cycle apparatus 1 can be operated at an operating pressure lower than that of the existing refrigeration cycle apparatus, and thus the manufacturing cost and the operation cost can be reduced. In addition, in the refrigeration cycle apparatus 1, the lower design pressure makes it possible to make members such as the casing of the compressor compact, and improve the reliability of the system.

In addition, when the refrigeration cycle apparatus 1 is an air conditioning apparatus, the refrigeration cycle apparatus 1 is capable of increasing the cooling and heating capacity by using the adsorption heat and the desorption heat of the refrigerant for cooling and heating. Thus, as a result of controlling the adsorption heat and the desorption heat of the refrigerant, the refrigeration cycle apparatus 1 is capable of improving the efficiency of the refrigeration cycle and reducing the operation cost as compared with the existing refrigeration cycle apparatus.

### (5) Modifications

### (5-1) Modification A

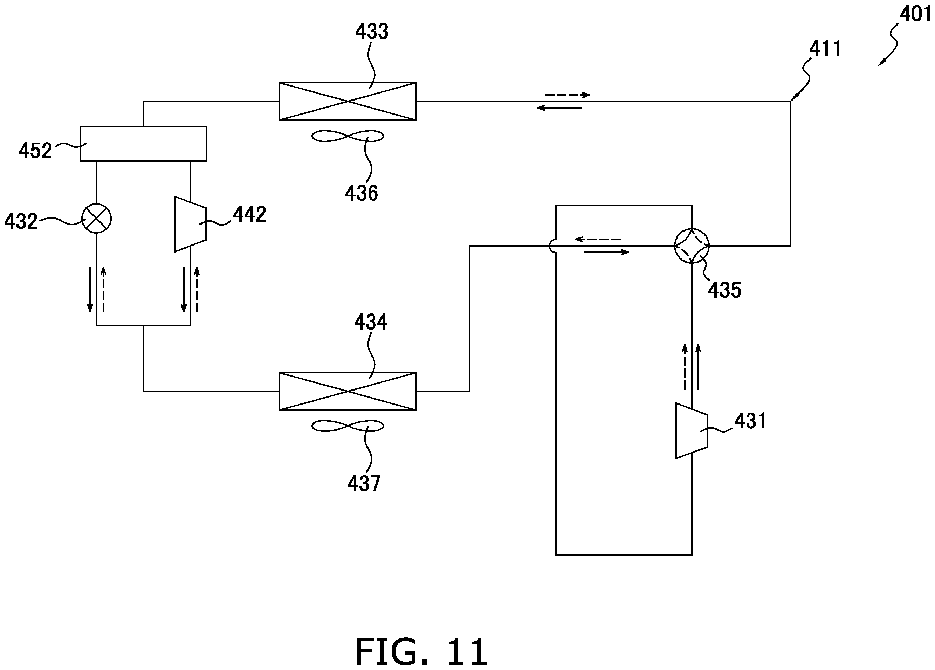

In the refrigeration cycle apparatus 401 of the fourth example, the refrigerant circuit 411 includes the first separator 451. However, the refrigerant circuit 411 need not include the first separator 451. In this case, as illustrated in Fig. 11, the refrigerant circuit 411 includes the compressor 431 and does not include the pressurizer 441. Similarly to the compressor 231 of the second modification, the compressor 431 of the present modification has the functions of both the compressor 31 and the pressurizer 41 in Fig. 1.

### (5-2) Modification B

The adsorbent used in the refrigeration cycle apparatuses 1, 101, 201, 301, 401, and 501 is a metal-organic framework. Alternatively, a material other than a metal-organic framework may be used as the adsorbent.

The embodiment of the present disclosure has been described above. It is to be understood that the embodiment and the details can be variously changed without deviating from the gist and scope of the present disclosure described in the claims.

### REFERENCE SIGNS LIST

1: Refrigeration cycle apparatus (Refrigeration cycle)
101: Refrigeration cycle apparatus (Refrigeration cycle)
201: Refrigeration cycle apparatus (Refrigeration cycle)
301: Refrigeration cycle apparatus (Refrigeration cycle)
401: Refrigeration cycle apparatus (Refrigeration cycle)
501: Refrigeration cycle apparatus (Refrigeration cycle)
11: Refrigerant circuit (First unit)
111: First refrigerant circuit (First unit)
211: Refrigerant circuit (First unit)
311: Refrigerant circuit (First unit)
411: Refrigerant circuit (First unit)
511: Refrigerant circuit (First unit)
31: Compressor
131: Compressor
231: Compressor
331: Compressor
431: Compressor
531: Compressor
32: Expansion mechanism
132: Expansion mechanism
232: Expansion mechanism
332: Expansion mechanism
432: Expansion mechanism
532: Expansion mechanism
133: First adsorber
134: Second adsorber
135: Switcher
351: Separator
451: First separator (Separator)
452: Second separator (Separator)
41: Pressurizer
341: Pressurizer
441: Pressurizer
42: Depressurizer
442: Depressurizer
12: Adsorption circuit (Second unit)
512: Adsorption circuit (Second unit)
541: Pressurizer
542: Depressurizer
513: First mixer (Mixer)
514: Second mixer (Mixer)

### CITATION LIST

### PATENT LITERATURE

PTL 1: International Publication No. WO2009/145278A1

## Claims

1. A refrigeration cycle apparatus comprising:
a first unit constituting a refrigeration cycle in which a refrigerant circulates; and
an adsorbent that adsorbs and desorbs the refrigerant circulating in the first unit, wherein
the adsorbent adsorbs and desorbs the refrigerant in accordance with a change in a pressure of the refrigerant circulating in the first unit.

2. A refrigeration cycle (1, 101, 201, 301, 401, 501) apparatus comprising:
a first unit (11, 111, 211, 311, 411, 511) including a compressor (31, 131, 231, 331, 431, 531) that compresses a refrigerant, the first unit constituting a vapor compression refrigeration cycle in which the refrigerant circulates; and
an adsorbent that adsorbs and desorbs the refrigerant circulating in the first unit, wherein
the adsorbent adsorbs and desorbs the refrigerant in accordance with a change in a pressure of the refrigerant circulating in the first unit.

3. The refrigeration cycle apparatus according to claim 2, wherein
the first unit further includes
an expansion mechanism (32, 132, 232, 332, 432, 532) that decompresses the refrigerant,
a high-pressure region in which the refrigerant that has been compressed by the compressor and that has not yet been decompressed by the expansion mechanism flows, and
a low-pressure region in which the refrigerant that has been decompressed by the expansion mechanism and that has not yet been compressed by the compressor flows, and
the adsorbent adsorbs the refrigerant in the high-pressure region and desorbs the refrigerant in the low-pressure region.

4. The refrigeration cycle apparatus according to claim 3, further comprising:
a first adsorber (133) including the adsorbent;
a second adsorber (134) including the adsorbent; and
a switcher (135) that alternately switches between a first mode and a second mode, wherein
in the first mode, the switcher introduces the refrigerant in the high-pressure region into the first adsorber to cause the adsorbent in the first adsorber to adsorb the refrigerant, and introduces the refrigerant in the low-pressure region into the second adsorber to cause the adsorbent in the second adsorber to desorb the refrigerant, and
in the second mode, the switcher introduces the refrigerant in the low-pressure region into the first adsorber to cause the adsorbent in the first adsorber to desorb the refrigerant, and introduces the refrigerant in the high-pressure region into the second adsorber to cause the adsorbent in the second adsorber to adsorb the refrigerant.

5. The refrigeration cycle apparatus according to claim 3, wherein
the adsorbent circulates in the first unit together with the refrigerant.

6. The refrigeration cycle apparatus according to claim 5, further comprising:
a separator (351, 451, 452) that separates the refrigerant circulating in the first unit and the adsorbent circulating in the first unit from each other, wherein
after being separated from the refrigerant by the separator, the adsorbent merges with the refrigerant compressed by the compressor or the refrigerant decompressed by the expansion mechanism.

7. The refrigeration cycle apparatus according to claim 6, wherein
the separator separates the refrigerant in the low-pressure region and the adsorbent from each other, and
the refrigeration cycle apparatus further comprises a pressurizer (41, 341, 441) that pressurizes the adsorbent separated from the refrigerant by the separator.

8. The refrigeration cycle apparatus according to claim 6 or 7, wherein
the separator separates the refrigerant in the high-pressure region and the adsorbent from each other, and
the refrigeration cycle apparatus further comprises a depressurizer (42, 442) that depressurizes the adsorbent separated from the refrigerant by the separator.

9. The refrigeration cycle apparatus according to any one of claims 6 to 8, wherein
the separator separates the refrigerant and the adsorbent from each other by centrifugal separation.

10. The refrigeration cycle apparatus according to claim 3, further comprising:
a second unit (12, 512) including a pressurizer (541) that pressurizes the adsorbent and a depressurizer (542) that depressurizes the adsorbent, the second unit constituting an adsorption refrigeration cycle in which the adsorbent circulates; and
a mixer (513, 514) that mixes the refrigerant flowing in the first unit and the adsorbent flowing in the second unit, wherein
the adsorbent adsorbs and desorbs the refrigerant in the mixer.

11. The refrigeration cycle apparatus according to claim 10, wherein
the mixer includes a permeable member that allows the refrigerant to pass therethrough and does not allow the adsorbent to pass therethrough, and
the adsorbent adsorbs and desorbs the refrigerant that has passed through the permeable member in the mixer.

12. The refrigeration cycle apparatus according to any one of claims 1 to 11, wherein the adsorbent includes a metal-organic framework including a metal ion and an organic ligand.

13. The refrigeration cycle apparatus according to any one of claims 1 to 12, wherein the refrigerant is selected from the group consisting of carbon dioxide, ammonia, and propane.
